# EUROPÄISCHE PATENTSCHRIFT

(11) **EP 0 741 158 B1**
(45) Veröffentlichungstag und Bekanntmachung des Hinweises auf die Patenterteilung: **13.04.2005**
(21) Anmeldenummer: 96106522.4
(22) Anmeldetag: 25.04.1996
(51) Int. Cl.: C08G 59/18, C08G 59/64, C09D 163/00, C09D 133/00, C08G 18/64, C08G 18/32, C09D 133/06, C09D 167/00

(54) **Gemische aus Epoxid/Amin Addukten und Copolymeren**
Mixtures of epoxy/amine adducts and copolymers
Mélanges de produits d époxye/amine et de copolymères

(30) Priorität: 02.05.1995 DE 19515916; 08.06.1995 DE 19520855
(43) Veröffentlichungstag der Anmeldung: 06.11.1996
(73) Patentinhaber: Surface Specialties Germany GmbH & Co. KG, 65203 Wiesbaden (DE)
(72) Erfinder: Epple, Ulrich, Dr., 8047 Graz (AT); Marten, Manfred, 55126 Mainz (AT); Kubillus, Uwe, Dr., 65195 Wiesbaden (AT); Oswald, Harald, 65719 Hofheim (AT)
(74) Vertreter: Deckers, Hellmuth, Dr.

(56) Entgegenhaltungen:
- EP-A- 0 677 539
- EP-A- 0 741 149
- DE-A- 3 908 875
- DE-A- 4 324 801
- US-A- 5 214 086
- CHEMICAL ABSTRACTS, vol. 116, no. 16, 20. April 1992 Columbus, Ohio, US; abstract no. 153149, KOBAYASHI, KAZUMASA ET AL: "Liquid hardener compositions for epoxy resins" XP002072254 & JP 03 275714 A (NIPPON STEEL CHEMICAL CO., LTD., JAPAN;DAINIPPON INK AND CHEMICALS, IN)
- CHEMICAL ABSTRACTS, vol. 114, no. 14, 8. April 1991 Columbus, Ohio, US; abstract no. 123337, MURAMATSU, ICHIRO ET AL: "Manufacture of polyurethane-polyureas containing functional groups" XP002072255 & JP 02 251516 A (DAINIPPON INK AND CHEMICALS, INC., JAPAN)

## Beschreibung

Zur Schonung der Umwelt ist eine Verringerung der Emission organischer Verbindungen - insbesondere der Lösemittelmenge - anzustreben. Der Lösemittelgehalt von Klebstoffen, Dichtmassen und Lacken muß in Zukunft auf Grund von gesetzlichen Vorschriften (z.B. "VOC regulations" ("volatile organic compounds") in USA und Großbritannien und "TA Luft" in Deutschland) gegenüber den heute noch üblichen Werten verringert werden.

Dieser länderspezifische gesetzliche Druck wird zum Teil schärfer bzw. schwächer ausgeübt. Der Gesetzgeber läßt hierbei unterschiedliche Bewertungen (Einzelbetrachtungen, Kombinationsbetrachtungen) zu, die den Anbieter solcher Beschichtungs-, Klebstoff- bzw. Dichtstoffprodukte zu neuen, unterschiedlichen technischen Leistungen zwingen. Dies geht so weit, daß das gewohnt hohe Leistungsniveau solcher Produkte aus Umweltgesichtspunkten auf ein Mindestniveau gekürzt werden muß.

Klarlacke als unpigmentierte Systeme werden z.B. in der Autoreparatur als oberste Schicht eingesetzt. Sie haben die Funktion, die pigmentierte untere Schicht ("base coat") gegen mechanische Einwirkung, gegen Witterungseinflüsse und gegen Schmutz zu schützen und der Gesamtlackierung den nötigen Glanz zu geben. Dieser Klarlack wurde vorwiegend mit polymeren Bindemitteln formuliert, die meist gleichzeitig auch in pigmentierten Decklacken zum Einsatz gekommen sind. Durch die scharfen VOC regulations wird der Rohstoffhersteller jedoch gezwungen, diesen Klarlack separat z.T. mit Zumischung von niedermolekularen Polyolen als "Blend-System" (EP-A-0 588 314, EP-A-0 129 124, US-A 5,098,956) zu formulieren.

Zur Reduzierung des Lösemittelgehalts lassen sich verschiedene Wege beschreiten. So werden extrem niedermolekulare polymere Bindemittel, allein oder in Abmischung mit höhermolekularen Bindemittelkomponenten verwendet. Bekannt sind z.B. sehr komplexe Bindemittel-Systeme, die Mischungen von oligomeren Caprolactonpolyolen, also Polyesterpolyolen mit Acrylatpolyolen und/oder Acrylatsternpolymeren enthalten (WO 92/22618).

Auch werden definierte organische Verbindungen, wie z.B. Asparaginsäurederivate, Aldimine, Ketimine oder Oxazolidine (EP-A-0 470 461, EP-A-0 403 921, US-A 5,214,086, "High performance polyurethane coatings systems utilizing oxazolidine based reactive diluents" G.N. Robinson, T.L. Johnson, M.D. Hoffman, 21 st Higher Solids and Waterborne Coatings Symposium (Feb. 1994) New Orleans, LA, USA) als Reaktivverdünner-Systeme bzw. als Alleinbindemittel beschrieben.

In der nicht vorveröffentlichten EP-A 0 677 539 werden Additionsprodukte von Hexandiamin-1,6 oder 2-Methylpentamethylendiamin mit dem Glycidylester der Versaticsäure beschrieben, die als sekundäre Diamine zur Kettenverlängerung eingesetzt werden können. In der DE-A 39 08 875 wird der Zusatz eines Addukts von Hexandiamin-1,6 mit dem Glycidylester der Versaticsäure bei der Herstellung eines Bindemittels für kathodische Elektrotauchlackierung aus Diäthanolamin, 3-(N,N-Dimethyamino)-propylamin und einem Epoxidharz auf Basis von Bisphenol A beschrieben. In der JP-A 02-251 516 wird die Umsetzung eines Isocyanat-präpolymeren mit einem Addukt aus Isophorondiamin und Cardura E (Glycidylester der Versaticsäure) beschrieben.

Für den Klarlack in der Fahrzeugreparaturlackierung werden in Kalifornien z.B. max. 3,5 lb/gal (0,42 kg/dm³) flüchtige organische Bestandteile zugelassen, d.h. ca. 59 % Feststoffmassenanteil im Lack (DIN 4-Becher, 21 s Ausflußzeit bei 23 °C). Dies verschärft sich bei Applikation eines konventionellen "base coats" dahingehend, daß der darüberliegende Klarlack eine VOC-Grenze von 2,1 lb/gal (0,25 kg/dm³, d.h. ca. 75 % Feststoffmassenanteil) nicht überschreiten darf. Wichtige verarbeitungstechnische Eigenschaften gehen beim Einsatz von extrem niedermolekularen Polyolen dann verloren, wie z.B. die schnelle Trocknung. Beim Einsatz der oben erwähnten definierten organischen Verbindungen ist eine lange Topfzeit (Verarbeitungszeit) nicht gewährleistet. Auch beobachtet man meist ein Anlösen des "base coats" bzw. Hautbildung, z.T. Trübung und Ausgasungen bei den schnellen Reaktivverdünner-Systemen. Das ursprüngliche Ziel, die Bindemittel neben dem unpigmentierten auch in pigmentierten Systemen einsetzen zu können, wird hierbei auch aufgegeben.

Aufgabe der vorliegenden Erfindung war es daher, umweltfreundliche Bindemittel-Systeme mit einem niedrigen Lösemittelgehalt zu entwickeln, die eine schnelle Trocknung, eine lange Topfzeit, kein oder nur geringes Anlösen des "base coats", keine Hautbildung, Trübungen oder Ausgasungen ergeben und den universellen Einsatz in unpigmentierten und pigmentierten Systemen ermöglichen. Zudem soll die Verwendungsmöglichkeit in umweltfreundlichen Klebstoffen und Dichtungsmassen gegeben sein.

Überraschenderweise wurde gefunden, daß durch den Zusatz von aliphatischen Epoxid-Amin-Addukten mit speziellen Strukturen in den Bausteinen solche Bindemittel-Systeme mit den oben genannten Eigenschaften entwickelt werden können.

Die Erfindung betrifft daher Gemische aus Massenanteilen von
a) 0,1 bis 99,9 % Hydroxylgruppen-haltigen Copolymeren ausgewählt aus Acrylat-Copolymeren, Polyestern und Polyester-modifizierten Acrylat-Copolymeren, und
b) 99,9 bis 0,1 % Epoxid-Amin-Addukten, die einen Massenanteil von mindestens 20 % an aliphatischen Epoxid- und/oder Amin-Bausteinenaufweisen, die mindestens ein tertiäres oder quaternäres Kohlenstoffatom enthalten.

Bevorzugt werden Massenanteile von mindestens 25 %, besonders bevorzugt mindestens 30 %, an solchen Bausteinen.

Als kettenverzweigte Bausteine werden im Folgenden solche bezeichnet, die mindestens ein tertiäres oder quaternäres aliphatisches Kohlenstoffatom aufweisen.

Gegenstand dieser Erfindung sind weiter Bindemittel-Systeme, die diese Epoxid-Amin-Addukte mit hoher Seitenkettenverzweigung enthalten und die hieraus formulierten umweltfreundlichen Beschichtungssysteme sowie deren Verwendungsmöglichkeit in umweltfreundlichen Überzügen, Klebstoffen und Dichtungsmassen.

Mit den festkörperreichen (sogenannten "high-solid"-) Bindemittelsystemen auf Polymerbasis lassen sich Feststoff-Massenanteile in Klarlacken bis zu ca. 67 % erreichen. Zu höheren Festkörper-Massenanteilen gelangt man nur mit Hilfe niedermolekularer ("monomerer") organischer Verbindungen mit definierter Funktionalität. Verbindungen, die ähnliche Strukturbausteine wie die in den üblichen "high-solid"-Systemen eingesetzten niedermolekularen Polyacrylatharze enthalten, sollten mit diesen homogen mischbar sein (Reaktivverdünner-System) und bei der Applikation die Trocknungseigenschaften verbessern. Auf diese Weise sollte sich das Ziel Feststoff-Massenanteil bis ca. 75 % erreichen lassen.

Für die Erfindung geeignete verzweigte Epoxid-Amin-Addukte lassen sich herstellen durch Umsetzung von
a) aliphatischen und/oder cycloaliphatischen Monoepoxiden mit 7 bis 33 Kohlenstoffatomen und
b) Aminen mit mindestens zwei primären oder sekundären Aminogruppen und 2 bis 30 Kohlenstoffatomen, deren primäre oder sekundäre Aminogruppen nicht direkt an einen Aromaten gebunden sind,
dadurch gekennzeichnet, daß ein Massenanteil von mindestens 20 % der Monoepoxide ausgewählt ist aus aliphatischen und cycloaliphatischen Monoepoxiden mit mindestens einem tertiären oder quaternären Kohlenstoffatom. Bevorzugt sind solche Epoxid-Amin-Addukte, zu deren Herstellung die Monoepoxide ausgewählt sind aus Glycidylestern von α-Alkylalkanmonocarbonsäuren und Glycidylestern von α,α-Dialkylalkanmonocarbonsäuren mit jeweils 8 bis 21 Kohlenstoffatomen in den Estern.

Weitere geeignete Epoxid-Amin-Addukte lassen sich herstellen durch Umsetzung von
a) aliphatischen und/oder cycloaliphatischen Diepoxiden mit 8 bis 50 Kohlenstoffatomen und
b) primären oder sekundären Monoaminen mit 4 bis 30 Kohlenstoffatomen und deren Aminogruppen nicht direkt an einen Aromaten gebunden sind,
dadurch gekennzeichnet, daß ein Massenanteil von mindestens 20 % der Monoamine ausgewählt ist aus Monoaminen mit mindestens einem tertiären oder quaternären Kohlenstoffatom. Bevorzugt werden solche Epoxid-Amin-Addukte, zu deren Herstellung die Diepoxide ausgewählt sind aus den Diglycidyläthern zweiwertiger aliphatischer Alkohole und den Diglycidylestern zweibasiger aliphatischer Carbonsäuren mit 8 bis 18 Kohlenstoffatomen in den Äthern bzw. 12 bis 42 Kohlenstoffatomen in den Estern.

Weitere geeignete Epoxid-Amin-Addukte lassen sich herstellen durch Umsetzung von
a) aliphatischen und/oder cycloaliphatischen Monoepoxiden mit 7 bis 33 Kohlenstoffatomen und
b) Monoaminen ausgewählt aus primären und sekundären Monoaminen mit 4 bis 30 Kohlenstoffatomen, deren Aminogruppen nicht direkt an einen Aromaten gebunden sind, dadurch gekennzeichnet, daß ein Massenanteil von mindestens a % der Monoamine ausgewählt ist aus Monoaminen mit mindestens einem tertiären oder quaternären Kohlenstoffatom, und ein Massenanteil von mindestens b % an Monoepoxiden ausgewählt ist aus aliphatischen und cycloaliphatischen Monoepoxiden mit mindestens einem tertiären oder quaternären Kohlenstoffatom, wobei a und b jeweils größer 0 sind und die Summe von a und b mindestens 20, bevorzugt mindestens 25, und besonders bevorzugt mindestens 30 beträgt.

Bevorzugt sind solche Epoxid-Amin-Addukte, zu deren Herstellung die Monoepoxide ausgewählt sind aus Glycidylestern von α-Alkylalkanmonocarbonsäuren und Glycidylestern von α,α-Dialkylalkanmonocarbonsäuren mit jeweils 8 bis 21 Kohlenstoffatomen in den Estern.

Die für die Erfindung geeigneten Epoxid-Amin-Addukte weisen pro Molekül mindestens eine sekundäre OH-Gruppe und mindestens eine sekundäre (bei primären Aminen als Edukten) oder tertiäre (bei sekundären Aminen als Edukten) Aminogruppen auf.

Es ist bekannt, daß Epoxid-Amin-Addukte auf Basis von Glycidylestern von α,α-Dialkylalkanmonocarbonsäuren mit Isophorondiamin zur Kettenverlängerung von Isocyanat-terminierten Urethan-Präpolymeren eingesetzt werden (JP 02251516 A2), wobei nur die Aminogruppen abreagieren und die sekundären OH-Gruppen erhalten bleiben. Es ist aber nicht bekannt, daß diese Verbindungen als Reaktivverdünner eingesetzt werden können, wobei die Aminogruppen und die Hydroxylgruppen abreagieren.

Diese definierten funktionellen Verbindungen führen als Mischungskomponente mit Polyisocyanaten gleichzeitig zu Polyurethan- und Polyharnstoff-Strukturen, wobei die letzteren eine schnelle Härtung und hohe Pendelhärten garantieren.

Wegen der hohen Wetterechtheit und der hohen Reaktivität werden zur Herstellung der Addukte bevorzugt aliphatische, sterisch gehinderte oder cyclische Amine eingesetzt. Sterisch gehindert bedeutet in diesem Zusammenhang das Vorhandensein von verzweigten aliphatischen Strukturen oder cyclischen aliphatischen oder aromatischen Strukturen. Beispiele geeigneter Diamine sind Neopentandiamin (2,2-Dimethyl-1,3-propandiamin), 1,2-Diamino-2-methylpropan, Diaminocyclohexane wie 1,2-Diaminocyclohexan und 1,4-Diaminocyclohexan, Xylylendiamine wie m-Xylylendiamin, 1,3-Bis(aminomethyl)cyclohexan, 1-Amino-2-aminomethyl-3,3,5(3,5,5)-trimethyl-cyclopentan, Triacetondiamin (4-Amino-2,2,6,6-tetramethylpiperidin), 1,8-Diamino-p-menthan, Isophorondiamin (3-Aminomethyl-3,5,5-trimethylcyclohexylamin), 4,4'-Diaminodicyclohexylmethan, 3,3'-Dimethyl-4,4'-diaminodicyclohexylmethan, 3(4),8(9)-Bis-(aminomethyl)-tricyclo[5.2.1.0^{2.6}]-decan. Beispiele geeigneter Monoamine sind Äthylamin, Butylamin, lso-Butylamin, tert.-Butylamin, Hexylamin, Cyclohexylamin, 2-Äthylhexylamin, Primene 81R® (Fa. Rohm & Haas, Gemisch von t-alkyl-substituierten primären Aminen). Es können auch Mischungen dieser Amine eingesetzt werden.

Geeignete Epoxid-Amin-Addukte können auch aus aliphatischen Diepoxiden und aliphatischen, verzweigten Monoaminen hergestellt werden, wie in der wäßrigen Epoxid-Amin-Chemie für Tauchlacke bekannt bzw. als Vernetzungsreaktionsprinzip oft genutzt.

Die aliphatischen Diepoxide sind ausgewählt aus den Estern und Äthern des Glycidylalkohols mit aliphatischen Dicarbonsäuren bzw. aliphatischen Diolen. Als Beispiel werden Äthylenglykoldiglycidyläther und Butandioldiglycidyläther genannt, geeignete Ester sind Diglycidylester (cyclo)aliphatischer unverzweigter oder verzweigter Dicarbonsäuren mit 2 bis 40 Kohlenstoffatomen, wie z.B. die Diglycidylester von Bernsteinsäure, Adipinsäure, Hexahydroterephthalsäure oder dimeren Fettsäuren. Für Klarlackanwendungen werden Diglycidyläther weniger bevorzugt, da diese bei der Außenanwendung meist eine schlechte Wetterechtheit besitzen. Geeignete Monoamine enthalten mindestens ein tertiäres oder quaternäres Kohlenstoffatom und insgesamt 4 bis 30 Kohlenstoffatome. Als Beispiele sind iso-Butylamin, tert.-Butylamin, 2-Äthylhexylamin und Primene 81R® (Fa. Rohm & Haas, Gemisch von t-alkyl-substituierten primären Aminen) zu nennen.

Die für die Erfindung geeigneten Epoxid-Amin-Addukte werden hier konventionell, d.h. nicht in wäßrigem Medium und zunächst als fertige Epoxid-Amin-Addukte mit bis zu vier funktionellen Gruppen (sekundäre Hydroxylgruppen, sekundäre oder tertiäre Aminogruppen) hergestellt, dann gegebenenfalls in organischen Lösemitteln oder Lösemittelgemischen angelöst und danach einer Vernetzung zugeführt.

Die Umsetzungsprodukte aus Monoepoxid und Diamin oder Monoamin bzw. Diepoxid und Monoamin sind mit oder ohne Katalysatoren leicht zugänglich. Solche Produkte besitzen eine gewichtsmittlere molare Masse unter 3000, besonders unter 2000 und insbesondere unter 1500 g/mol. Der Zusatz dieser Verbindungen zu Lack-Systemen, wie z.B. Mischungen von mehreren Polyolen, d.h. Polyacrylat-Polyolen oder Polyester-Polyolen mit/ohne Zusatz von bisher bekannten Reaktivverdünnern, reinen Polyolen ("Alleinbindemittel") sowie Kombinationen dieser Möglichkeiten führt zu Feststoff-Massenanteilen bis ca. 75 %. Dieses Ziel erreicht man auf alle Fälle beim alleinigen Einsatz der Epoxid-Amin-Addukte mit entsprechenden Härtungskomponenten.

Die für die Erfindung geeigneten Epoxid-Amin-Addukte sind herstellbar durch die Addition des Amins an das Epoxid bei erhöhter Temperatur. Bevorzugt wird das Amin vorgelegt und bei Temperaturen von 50 bis 150 °C unter Inertgasatmosphäre mit dem Epoxid meist ohne Katalysator umgesetzt, bis kein Epoxid mehr vorhanden ist. Die dargestellten Addukte können mit frei wählbaren Lösemitteln bzw. Lösemittelgemischen zu einem wählbaren Anteil angelöst werden.

Die eingangs erwähnten extrem niedermolekularen Bindemittel bzw. Bindemittel-Mischungen können durch Zumischen dieser Epoxid-Amin-Addukte im Lackfeststoff-Massenanteil von ca. 67 auf bis ca. 71 % (DIN 4-Becher, 21 s, 23 °C) und in der Reaktivität angehoben werden.

Der Einsatz solcher Addukte als Alleinbindemittel in der Lacktechnik setzt die Verlangsamung der Härtungsreaktion voraus. Retardierende (verzögernde) Additive sind z.B. metallorganische Verbindungen, Elektronenmangelverbindungen, bestimmte Säuren oder Salze. Als metallorganische Verbindungen kommen z.B. Zinnverbindungen wie Dibutylzinndilaurat, Dibutylzinndiacetat und Dibutyloxozinn sowie Zinkoktoat oder Zirkon-Verbindungen in Betracht. Elektronenmangelverbindungen sind beispielsweise Bortrifluorid, Aluminiumverbindungen und - Carbokationen. Säuren sind beispielsweise Ameisen-, Essigsäure oder Perchlorsäure oder Trichloressigsäure. Auch Salze wie Triphenylmethylperchlorat, Tropyliumhexachlorantimonat oder Acetylperchlorat sind einsetzbar.

Solche Verbindungen werden beispielsweise mit den Epoxid-Amin-Addukten vorgemischt und bilden dann mit den Stickstoffatomen der Aminogruppen und den Sauerstoffatomen der Alkoholgruppen "chelatartige" Komplexe, die je nach Komplexstärke in Konkurrenz zur Härtungsreaktion treten.

Die Feststoff-Massenanteile von solchen Lack-Systemen aus Bindemitteladdukt und Härter betragen bis zu ca. 75 % (DIN 4-Becher, 21 s, 23 °C).

Zur Verlangsamung der Härtungsreaktion können solche Epoxid-Amin-Addukte auch in ihrer Funktionalität herabgesetzt werden, indem man nachträglich teilweise oder vollständig eine Modifizierung vornimmt. Solche Modifizierungen können Schutzgruppen (temporär) oder dauerhafter Natur sein. Beispielsweise können die sekundären Aminofunktionen durch Umsetzen mit Isocyanat-Verbindungen, die pro Molekül durchschnittlich 0,8 bis 1,5 freie NCO-Gruppen und mindestens eine tertiäre Aminogruppe enthalten, inaktiviert werden.

Als Beispiel einer temporären Schutzgruppe kann die Umsetzung der sekundären Alkohol- und Aminfunktion mit Aldehyden oder Ketonen dienen. Die entstehenden Oxazolidine lassen sich leicht mit Luftfeuchtigkeit - Wasser in die Ausgangsfunktionalitäten rückspalten, die dann sukzessive für Härtungsreaktionen zur Verfügung stehen.

Solche geschützten Epoxid-Amin-Addukte sind ebenfalls für die Erfindung geeignet und werden im Folgenden auch unter diesem Begriff der für die Erfindung geeigneten Epoxid-Amin-Addukte eingeordnet.

Die für die Erfindung geeigneten Epoxid-Amin-Addukte in Kombination mit Polyacrylat-Polyolen eignen sich besonders gut für lacktechnische Anwendungen in Ein- bzw. Zwei-Komponenten-Systemen, insbesondere für sogenannte "high-solid" Systeme, also für lösemittelhaltige Mischungen mit hohem Festkörpergehalt.

In den erfindungsgemäßen Gemischen können insbesondere geeignete hydroxylgruppenhaltige Copolymere ausgewählt werden aus
aa) Copolymeren, die durch gemeinsame Polymerisation von mindestens zwei Vinylmonomeren erhältlich sind, von denen mindestens eines mindestens eine Hydroxylgruppe aufweist,
ab) Copolymeren, die durch gemeinsame Polymerisation von mindestens zwei Vinylmonomeren erhältlich sind, von denen mindestens eines mindestens eine Säuregruppe aufweist, und die vor, während oder nach der Polymerisation mit mindestens einer Verbindung umgesetzt werden, die mit den Säuregruppen unter Esterbildung und Bildung mindestens einer Hydroxylgruppe reagiert, und
ac) Copolymeren, die durch gemeinsame Polymerisation von mindestens zwei Vinylmonomeren erhältlich sind, von denen mindestens eines mindestens eine Hydroxylgruppe aufweist, und die vor, während oder nach der Polymerisation mit mindestens einer Verbindung umgesetzt werden, die teilweise oder vollständig mit den Hydroxylgruppen unter Esterbildung und Bildung mindestens einer Hydroxylgruppe reagiert.

Die Copolymere gemäß aa) werden üblicherweise in einer radikalischen Lösemittelpolymerisation hergestellt. Nur Produkte aus Basis von Maleinsäureestern können auch in einer Substanzpolymerisation, d.h. ohne Lösemittel hergestellt werden. Bei Copolymeren des Typs ab) oder ac) ist diese zusätzliche Freiheit der Polymerisationsartenwahl, ob Lösemittel- oder Substanzpolymerisation, durch Zusatz von speziellen höhersiedenden Verbindungen gegeben. Beispiele dieser Verbindungen beim Typ ab) sind Glycidylester oder -äther bzw. beim Typ ac) Lactone.

Besonders bevorzugt werden solche Mischungen, in denen die für die Erfindung geeigneten Epoxid-Amin-Addukte zu einem Gemisch von hydroxylgruppenhaltigen Copolymerisaten zugefügt werden, die jeweils eine Hydroxylzahl von 10 bis 250 mg/g aufweisen, und von denen mindestens eines eine gewichtsmittlere molare Masse über 3500 g/mol und mindestens eines eine gewichtsmittlere molare Masse unter 3500 g/mol aufweist.

Geeignete Lösemittel für die für die Erfindung geeigneten Epoxid-Amin-Addukte sind z.B. aliphatische, cycloaliphatische und aromatische Kohlenwasserstoffe, wie Alkylbenzole, z.B. Xylol, Toluol; Ester, wie Äthylacetat, Butylacetat, Acetate mit längeren Alkoholresten, Butylpropionat, Pentylpropionat, Äthylenglykolmonoäthylätheracetat, das entsprechende Methylätheracetat oder Propylenglykolmethylätheracetat; Äther, wie Äthylenglykolacetatmonoäthyl-, -methyl- oder -butyläther; Glykole; Alkohole; Ketone wie Methylisoamylketon, Methylisobutylketon; Lactone und Gemische derartiger Lösemittel. Als Lösemittel sind auch Umsetzungsprodukte von Lactonen mit Glykolen oder Alkoholen einsetzbar.

Gegenstand der vorliegenden Erfindung sind weiterhin Beschichtungsmittel, die die erfindungsgemäßen Gemische als Bindemittelkomponente enthalten.

Bevorzugt werden dabei Beschichtungsmittel enthaltend mindestens ein für die Erfindung geeignetes Epoxid-Amin-Addukt als Reaktivverdünner und mindestens ein für die Erfindung geeignetes hydroxyfunktionelles Bindemittel und mindestens einen Härter.

Diese Reaktivverdünner-Systeme können in Gegenwart von geeigneten Vernetzern kalt oder bei erhöhter Temperatur gehärtet werden.

Als Härterkomponente eignen sich in diesen Beschichtungsmitteln Aminoplastharze, Polyisocyanate oder Säure- bzw. Säureanhydridgruppen enthaltende Verbindungen einzeln oder in Kombination. Der Vernetzer wird jeweils in solch einer Menge zugesetzt, daß das Verhältnis der Anzahl der im Bindemittel oder dem Bindemittelsystem vorhandenen OH- oder NH-Gruppen zur Anzahl der reaktiven Gruppen des Vernetzers zwischen 0,3 : 1 und 3 : 1 liegt.

Als Härterkomponente geeignete Aminoplastharze sind bevorzugt Harnstoff-, Melamin- und Benzoguanaminharze, einzeln oder in Mischung. Es handelt sich hierbei um verätherte Harnstoff-, Melamin- bzw. Benzoguanamin-Formaldehyd-Kondensationsprodukte. Geeignete Mischungsverhältnisse liegen im Bereich von 50 : 50 bis 90 : 10 Hydroxyl- oder Aminogruppen-haltiges Bindemittel-System zu Aminoharzvernetzer auf die Masse des Festharzes bezogen. Geeignete Phenolharze und ihre Derivate können auch als Härter eingesetzt werden. Diese Vernetzer führen in Gegenwart von Säuren, z.B. p-Toluolsulfonsäure zur Aushärtung der Beschichtung. Die Heißhärtung kann in üblicher Weise bei Temperaturen von 90 bis 200 °C, z.B. in 10 bis 30 Minuten vorgenommen werden.

Für die Härtung der erfindungsgemäßen Gemische unter Vernetzung eignen sich Polyisocyanate, besonders bei moderaten Temperaturen bzw. bei Raumtemperatur. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-Isocyanato-3,3,5-trimethyl-5-isocyanatomethylcyclohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, wie sie in an sich bekannter Weise durch Phosgenierung von Anilin/Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP-A 0 470 461 beschrieben werden.

Zu den besonders bevorzugten modifizierten Polyisocyanaten gehören das N,N',N''-Tris-(6-isocyanatohexyl)-biuret und seine Gemische mit seinen höheren Homologen, sowie das N,N',N''-Tris-(6-isocyanatohexyl)-isocyanurat bzw. dessen Gemische mit seinen höheren, mehr als einen Isocyanuratring aufweisenden Homologen.

Für eine Härtung bei erhöhter Temperatur kommen zusätzlich verkappte Polyisocyanate, Polycarbonsäuren bzw. deren Anhydride in Frage.

Die erfindungsgemäßen Gemische eignen sich besonders gut zur Herstellung von festkörperreichen, lösemittelhaltigen Klar- und Decklacken sowie für Füller.

In Beschichtungsmitteln, die mit den erfindungsgemäßen Gemischen hergestellt werden, können auch andere in der Beschichtungstechnologie übliche Hilfs- und Zusatzmittel enthalten sein, die bisher noch nicht genannt sind. Hierzu gehören insbesondere Katalysatoren, Verlaufmittel, Silikonöle, Weichmacher, wie Phosphorsäureester und Phthalsäureester, Pigmente wie Eisenoxide, Bleioxide, Bleisilikate, Titandioxid, Bariumsulfat, Zinksulfid, Phthalocyaninkomplexe etc. und Füllstoffe wie Talkum, Glimmer, Kaolin, Kreide, Quarzmehl, Asbestmehl, Schiefermehl, verschiedene Kieselsäuren, Silikate etc., viskositätskontrollierende Zusätze, Mattierungsmittel, UV-Absorber und Lichtschutzmittel, Antioxidantien und/oder Peroxidzersetzer, Entschäumer und/oder Netzmittel, aktive Verdünner (weitere Reaktivverdünner) und dergleichen.

Die Beschichtungsmittel können nach bekannten Methoden, beispielsweise durch Streichen, Tauchen, Fluten oder mit Hilfe von Walzen oder Rakeln, insbesondere aber durch Spritzen auf das jeweilige Substrat aufgetragen werden. Sie können in der Wärme appliziert werden, gegebenenfalls können sie durch Eindrücken von superkritischen Lösemitteln (z.B. CO₂) in eine applikationsfertige Form gebracht werden. Autoreparatur-, Industrie-, Holz-, Kunststoff-, Baustoff- und Textil-Lacke mit ausgezeichneten Eigenschaften lassen sich mit Bindemitteln erhalten, die mit den erfindungsgemäßen Gemischen hergestellt werden. Diese Bindemittel können sowohl zur Herstellung von Zwischenschichten als auch von pigmentierten oder unpigmentierten Decklacken eingesetzt werden.

Hierzu werden die Lacke im allgemeinen innerhalb des Temperaturbereichs von -20 bis + 100°C, vorzugsweise von -10 bis + 80°C ausgehärtet.

Die Erfindung wird in den folgenden Beispielen näher erläutert. In den Ausführungsbeispielen bedeuten alle Prozentangaben Massenanteile.

### Beispiele:

### la.) Herstellung der Epoxid-Amin-Addukte - ohne Schutzgruppe

In einem mit Rührwerk, Inertgaseinleitung, Heiz- und Kühlsystem sowie einer Zugabeeinrichtung ausgestatteten Reaktor wird das Diamin vorgelegt und unter Inertgas auf die Reaktionstemperatur aufgeheizt. Dann wird innerhalb von 3 (Beispiel a) bzw. innerhalb 4 Stunden (Beispiel b) der Glycidylester einer α,α-Dialkylalkanmonocarbonsäure [z. B. Glycidylester der Versatic 10-Säure (Handelsname: Cardura® E 10, Shell Chemicals)] zudosiert. Die Nachreaktionszeit wird so gewählt, bis der Epoxidgehalt 0 ist (Tabelle 1).

Die Epoxid-Amin-Addukte werden in geeigneten Lösemitteln oder Lösemittelgemischen angelöst.

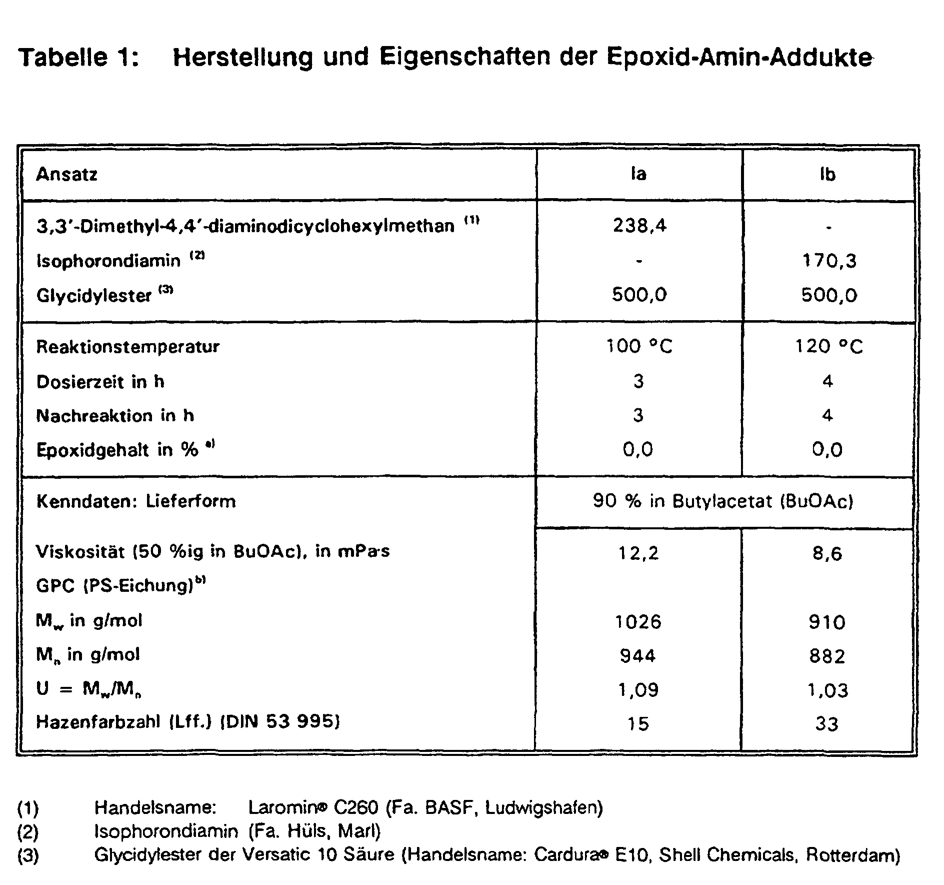

- Bestimmung der Kenndaten:: Epoxidzahl (inkl. Amin), Aminzahl und Viskosität
(Normen siehe "Analytische Bestimmungsmethoden" (Broschüre: Kunstharze Hoechst AG, Ausgabe 1982))

a) Der Epoxidgehalt kann durch die Differenz zwischen Epoxidzahl inkl. Amin (mit Tetrabutylammoniumbromid) und der Aminzahl (primär oder sekundär - ohne Tetrabutylammoniumbromid) bestimmt werden.
b)
   - GPC: M_{w}, Mₙ: Millipore® Waters Chromatographie System 860
   - Pumpe:: Waters Model 590, RI-Detektor: Waters Model 410
   - Säulensatz:: Waters Ultrastyragel 1 x 1000 Å + 1 x 500 Å + 1 x 100 Å (Ångström)
   - Lösungsmittel:: Tetrahydrofuran bei 40°C
   - Durchfluß:: 1 ml/min, Konzentration: 1 %ig auf Festkörper
   - Kalibrierung:: Polystyrol (Fa. PSS, Mainz)

Die dargestellten Epoxid-Amin-Addukte sind vollständig umgesetzt (bestimmt durch den Epoxidgehalt). Die GPC zeigt nur die relative molare Masse in Bezug auf die Polystyrol-Eichung. Die Produkte sind einheitlich (U ≤ 1,1). Die dargestellten Epoxid-Amin-Addukte besitzen geringste Lösungsviskositäten (50%ig in Butylacetat).

### Ib.) Oxazolidinherstellung - Epoxid-Amin-Addukte - mit temporärer Schutzgruppe

In einem 500 ml-Dreihalskolben mit Rührwerk, Inertgaseinleitung, Heizsystem und Dosiertrichter werden 300 g 90 %iges Epoxid-Amin-Addukt Ib (0,403 mol) vorgelegt und innerhalb 4 Stunden 61,0 g (0,845 mol) Isobutyraldehyd bei 55 °C unter Rühren zudosiert. Danach werden ca. 50 ml Toluol zugesetzt und das Wasser-Lösemittelgemisch (inkl. Azeotrop) innerhalb 2 Stunden abdestilliert. Das gebildete farblose bis leicht gelbliche Oxazolidin Ic ist mittels FT-IR zu identifizieren:
OH-Bande 3450 cm⁻¹ (schwach), O-C-N-System: Triplett 1080 - 1200 cm⁻¹ .

### II Herstellung der Lacke

Zur Herstellung der erfindungsgemäßen härtbaren Beschichtungsmittel werden die Komponenten bestehend mindestens aus einem erfindungsgemäßen Gemisch mit den Hilfs- und Zusatzstoffen, Lösemitteln und Vernetzern im beschriebenen Mischungsverhältnis (Tabelle 2) gemischt und mit weiterem Verdünnungsmittel auf die Spritzviskosität von 21 bis 22 Sekunden mit dem Auslaufbecher (DIN 52 211, 4 mm, 23 °C) eingestellt. Bei Copolymerisat-Komponenten mit niedriger Viskosität kann dies in Substanz erfolgen, wobei gegebenenfalls auf höhere Temperaturen erwärmt wird.

Die Epoxid-Amin-Addukte müssen in einem Vorschritt mit retardierenden Additiven versetzt und auf geeignete Vorverdünnung gebracht werden. Es empfiehlt sich, auch die Isocyanate vorverdünnt einzusetzen.

Produkte höherer Viskosität werden - falls die härtbaren Mischungen nicht als Pulverlack eingesetzt werden - vor der Mischung in den erwähnten Verdünnungsmitteln gelöst oder dispergiert. Im Falle von pigmentierten Systemen wird zunächst in einem Dispergierschritt aus den entsprechenden Pigmenten zusammen mit den erfindungsgemäßen Gemischen evtl. unter Zusatz eines geeigneten speziellen Anreibeharzes in einem Dispergieraggregat geeigneter Bauweise eine Pigmentpaste erzeugt. Diese wird so oder unter Zugabe weiteren Bindemittels, das mit den übrigen Komponenten des betreffenden Lacksystems verträglich ist, gemischt und unter Zufügung weiterer Verdünnungsmittel oder lacktypischer Zusätze komplettiert. Die Topfzeit und die Eigenschaften der resultierenden Filme hängen dabei von den Verfahrensbedingungen ab, d.h. von der Art und Menge der Ausgangsstoffe, Dosierung des Katalysators, der Temperaturführung etc. Die Härtung kann diskontinuierlich betrieben oder kontinuierlich durchgeführt werden, beispielsweise mittels einer automatischen Lackiervorrichtung.

**Tabelle 2**

| **Herstellung der "high solid" Klarlacke mit Epoxid-Amin-Addukt** | | |
|---|---|---|
| **Bindemittel** | **Blend-RV-System** | **RV-System** |
| hochmolekulares Copolymer A2 (DE-A 43 24 801), (70 %) | 20 | - |
| Copolymer der Anmeldung DE-P 195 15 919.5, Beispiel Ia (68,5 %) | 20 | 63 |
| Epoxid-Amin Ib * (90 %) | 20 | 7 |
| Tinuvin® 292 | 0,49 | 0,43 |
| Tinuvin® 1130 | 1,46 | 1,28 |
| Si Öl LO 50% (10 %ig) | 0,98 | 0,85 |
| Lösemittelgemisch (2:3:10) Solvesso® 100 /Xylol /BuOAc | 14,63 | 12,80 |
| Desmodur®N 3390 | 38,2 | 36,5 (80%ig) |
| Auslaufbecher (DIN 53 211) in Sekunden | 21 | 21 |
| Lackbezeichnung | Lack 1 | Lack 2 |
| RV Reaktivverdünner (Epoxid-Amin Ib) * Das Epoxid-Amin-Addukt wurde mit 0,8 Gew.-Teilen einer 10 %igen Dibutylzinndilaurat-Lösung (10%ig) vorgemischt. Tinuvin®292 "HALS" (Fa. Ciba Geigy, Basel) Tinuvin® 1130 UV-Absorber (Fa. Ciba Geigy, Basel) Si Öl LO 50% Verlaufmittel (Silikonöl der Fa. Wacker GmbH, Burghausen) Desmodur® N 3390 Isocyanurat-Gruppen aufweisendes Polyisocyanat (Fa. Bayer AG, Leverkusen) BuOAc Butylacetat | | |

Die Klarlacke wurden nach obiger Vorverdünnung mit dem gleichen Lösemittelgemisch (Solvesso®100/Xylol/BuOAc) genau auf 21 s eingestellt.

### III Lacktechnische Prüfung

### a.) Klarlacke

Die wie in II gefertigten Lacksysteme werden mittels 100 µm Rakel auf gereinigte Glasplatten appliziert und unter den Bedingungen der Lufttrocknung geprüft.

**Tabelle 3**

| **Lacktechnische Prüfung der "high solid" Klarlacke mit Epoxid-Amin-Addukt** | | |
|---|---|---|
| **Lackbezeichnung** | **Lack 1** | **Lack 2** |
| Aussehen | transparent | transparent |
| Ausgang/Topfzeit | > 3 h | > 6 h |
| Staubtrocknung | 20' | 41' |
| Klebfreitrocknung | 90' | 168' |
| FK- 1 h 125 °C | 68,1 | 70,1 |

| Pendelhärte nach | | |
|---|---|---|
| 24 h | 155 | 86 |
| 2 d | 179 | 102 |
| 4 d | 191 | 126 |
| 10 d | 201 | 181 |
| Superbenzin nach 10 d in Min. | > 30 | > 20 |
| Pendelhärten nach König (Sekunden) FK Festkörperbestimmung nach DIN 53 216 d Tage, ' Minuten | | |

### Fazit:

Das System "high solid" Polyacrylatpolyol/extrem niedermolekulares Polyacrylatpolyol/Epoxid-Amin-Addukt weist einen ähnlich hohen Feststoffmassenanteil (ca. 68 %) wie beim extrem niedermolekularen Polyacrylatpolyol als Alleinbindemittel (Lack 3 in der gleichzeitig eingereichten deutschen Anmeldung DE-P 195 15 919.5) auf, allerdings mit guter Trocknung und Beständigkeit gegen Superbenzin.

Das System extrem niedermolekulares Polyacrylatpolyol/Epoxid-Amin-Addukt weist einen noch höheren Feststoffmassenanteil auf bei verbesserter Trocknung, Pendelhärten und Beständigkeiten gegenüber dem Lack 3 in der gleichzeitig eingereichten Anmeldung DE-P 195 15 919.5.

### b.) Pigmentierbarkeit der Lacke

Als Maß für die Pigmentierbarkeit der Lacke diente der "Ölbedarf" bis zum Netzpunkt (Glasurit Handbuch "Lacke und Farben" 10. Auflage (1969) S. 144 f.)

Es wurde eine bestimmte Pigmentmenge (5 bis 10 g) Kronos 2310 Weißpigment (Fa. Kronos Titan GmbH, Leverkusen) vorgelegt und tropfenweise mit ca. 70 %iger Lösung des Bindemittels (Copolymer A2 aus DE-A 43 24 801, Copolymer la in der gleichzeitig eingereichten Anmeldung DE-P 195 15 919.5) bzw. der Mischungen (Blend-RV-System) versetzt und nach jedem Tropfen mit dem Spatel gründlich verrieben. Wenn die Masse anfängt, sich zusammenzuballen und ein dunkles Aussehen annimmt, ist der Netzpunkt erreicht (Tabelle 4).

**Tabelle 4**

| **Pigmentierbarkeit - Netzpunkt der Bindemittel-Systeme (Massenanteil in % auf die Feststoffe bezogen)** | | | |
|---|---|---|---|
| System | Copolymer A2 (Vergleich) DE-A 43 24 801 | Copolymer Ia (Vergleich) DE-P 195 15 919.5 | Blend-RV-System |
| Netzpunkt Bindemittel (Feststoff-Massenanteil) | 19,1 | 17,6 | 15,8 |

### Fazit:

Vom Vergleichspolymer A2 wird am meisten Bindemittel gebraucht, um den Netzpunkt zu erreichen. Das extrem niedermolekulare Copolymer la (Vergleich) kommt danach, zeigt jedoch das Problem der mangelhaften Trocknung im Klarlack. Den geringsten Bindemittelbedarf weist das Blendsystem mit dem Epoxid-Amin-Addukt auf, das in der Klarlackprüfung auch eine rasche Trocknung zeigte.

## Patentansprüche

1. Gemische aus Massenanteilen von
a) 0,1 bis 99,9 % Hydroxylgruppen-haltigen Copolymeren ausgewählt aus Acrylat-Copolymeren, Polyestern und Polyester-modifizierten Acrylat-Copolymeren, und
b) 99,9 bis 0,1 % Epoxid-Amin-Addukten, die einen Massenanteil von mindestens 20 % an aliphatischen Epoxid- und/oder Amin-Bausteinen aufweisen, die mindestens ein tertiäres oder quaternäres Kohlenstoffatom enthalten.

2. Gemische nach Anspruch 1, **dadurch gekennzeichnet, daß** die Epoxid-Amin-Addukte herstellbar sind durch Umsetzung von
a) aliphatischen und/oder cycloaliphatischen Monoepoxiden mit 7 bis 33 Kohlenstoffatomen und
b) Aminen mit mindestens zwei primären oder sekundären Aminogruppen und 2 bis 30 Kohlenstoffatomen, deren primäre oder sekundäre Aminogruppen nicht direkt an einen Aromaten gebunden sind,
wobei ein Massenanteil von mindestens 20 % der Monoepoxide ausgewählt ist aus aliphatischen und cycloaliphatischen Monoepoxiden mit mindestens einem tertiären oder quaternären Kohlenstoffatom.

3. Gemische nach Anspruch 1, **dadurch gekennzeichnet, daß** die Epoxid-Amin-Addukte herstellbar sind durch Umsetzung von
a) aliphatischen und/oder cycloaliphatischen Diepoxiden mit 8 bis 50 Kohlenstoffatomen und
b) primären oder sekundären Monoaminen mit 4 bis 30 Kohlenstoffatomen, deren Aminogruppen nicht direkt an einen Aromaten gebunden sind,
**dadurch gekennzeichnet, daß** ein Massenanteil von mindestens 20 % der Monoamine ausgewählt ist aus Monoaminen mit mindestens einem tertiären oder quaternären Kohlenstoffatom.

4. Gemische nach Anspruch 1, **dadurch gekennzeichnet, daß** die Epoxid-Amin-Addukte herstellbar sind durch Umsetzung von
a) aliphatischen und/oder cycloaliphatischen Monoepoxiden mit 7 bis 33 Kohlenstoffatomen und
b) Monoaminen ausgewählt aus primären und sekundären Monoaminen mit 4 bis 30 Kohlenstoffatomen, deren Aminogruppen nicht direkt an einen Aromaten gebunden sind, **dadurch gekennzeichnet, daß** ein Massenanteil von mindestens a % der Monoamine ausgewählt ist aus Monoaminen mit mindestens einem tertiären oder quaternären Kohlenstoffatom, und ein Massenanteil von mindestens b % an Monoepoxiden ausgewählt ist aus aliphatischen und cycloaliphatischen Monoepoxiden mit mindestens einem tertiären oder quaternären Kohlenstoffatom, wobei die Summe von a und b mindestens 20 beträgt und a und b jeweils größer als Null sind.

5. Gemische gemäß Anspruch 2, **dadurch gekennzeichnet, daß** die Monoepoxide ausgewählt sind aus Glycidylestern von α-Alkylalkanmonocarbonsäuren und Glycidylestern von α,α-Dialkylalkanmonocarbonsäuren mit jeweils 8 bis 21 Kohlenstoffatomen in den Estern.

6. Gemische gemäß Anspruch 3, **dadurch gekennzeichnet, daß** die Diepoxide ausgewählt sind aus den Diglycidyläthern zweiwertiger aliphatischer Alkohole und den Diglycidylestern zweibasiger aliphatischer Carbonsäuren mit 8 bis 18 Kohlenstoffatomen in den Äthern bzw. 12 bis 42 Kohlenstoffatomen in den Estern.

7. Gemische nach Anspruch 4, **dadurch gekennzeichnet, daß** die Monoepoxide ausgewählt sind aus Glycidylestern von α-Alkylalkanmonocarbonsäuren und Glycidylestern von α,α-Dialkylalkanmonocarbonsäuren mit jeweils 8 bis 21 Kohlenstoffatomen in den Estern.

8. Gemische gemäß einem der Ansprüche 2, 3 und 4, **dadurch gekennzeichnet, daß** die Epoxid-Amin-Addukte in ihrer Funktionalität durch teilweise oder vollständige Umsetzung der funktionellen Hydroxyl- und Aminogruppen herabgesetzt sind.

9. Gemische gemäß Anspruch 8, **dadurch gekennzeichnet, daß** die funktionellen Gruppen der Epoxid-Amin-Addukte durch Umsetzung zu temporären Schutzgruppen blockiert sind.

10. Gemische gemäß Anspruch 9, **dadurch gekennzeichnet, daß** die temporären Schutzgruppen Oxazolidin-Verbindungen sind.

11. Gemische nach Anspruch 1, **dadurch gekennzeichnet, daß** die Hydroxylgruppen-haltigen Copolymeren ausgewählt sind aus
aa) Copolymeren, die durch gemeinsame Polymerisation von mindestens zwei Vinylmonomeren erhältlich sind, von denen mindestens eines mindestens eine Hydroxylgruppe aufweist,
ab) Copolymeren, die durch gemeinsame Polymerisation von mindestens zwei Vinylmonomeren erhältlich sind, von denen mindestens eines mindestens eine Säuregruppe aufweist, und die vor, während oder nach der Polymerisation mit mindestens einer Verbindung umgesetzt werden, die mit den Säuregruppen unter Esterbildung und Bildung mindestens einer Hydroxylgruppe reagiert, und
ac) Copolymeren, die durch gemeinsame Polymerisation von mindestens zwei Vinylmonomeren erhältlich sind, von denen mindestens eines mindestens eine Hydroxylgruppe aufweist, und die vor, während oder nach der Polymerisation mit mindestens einer Verbindung umgesetzt werden, die teilweise oder vollständig mit den Hydroxylgruppen unter Esterbildung und Bildung mindestens einer Hydroxylgruppe reagiert.

12. Gemische nach Anspruch 1, **dadurch gekennzeichnet, daß** ein Gemisch von Hydroxylgruppen-haltigen Copolymerisaten eingesetzt wird, die jeweils eine Hydroxylzahl von 10 bis 250 mg/g aufweisen, und von denen mindestens eines eine gewichtsmittlere molare Masse über 3500 glmol und mindestens eines eine gewichtsmittlere molare Masse unter 3500 g/mol aufweist.

13. Bindemittel für Beschichtungen enthaltend Gemische nach Anspruch 1.

14. Bindemittel für Beschichtungen enthaltend Gemische nach Anspruch 12.

15. Beschichtungsmittel enthaltend ein Gemisch nach Anspruch 1 und mindestens einen Härter ausgewählt aus der Gruppe der Aminoplastharze, der verkappten und unverkappten mehrfunktionellen Isocyanate und der organischen Verbindungen mit Säure- und/oder Säureanhydridgruppen.

## Claims

1. A mixture comprising proportions by mass of
a) from 0.1 to 99.9 % of hydroxyl-containing copolymers selected from acrylate copolymers, polyesters and polyester-modified acrylate copolymers,
b) from 99.9 to 0.1 % of epoxide-amine adducts having a mass fraction of at least 20 % of aliphatic epoxide and/or amine units which comprise at least one tertiary or quaternary carbon atom.

2. A mixture as claimed in claim 1, wherein the epoxide-amine adducts can be prepared by reacting
a) aliphatic and/or cycloaliphatic monoepoxides having 7 to 33 carbon atoms and
b) amines having at least two primary or secondary amino groups and 2 to 30 carbon atoms, whose primary or secondary amino groups are not attached directly to an aromatic structure,
a mass fraction of at least 20 % of the monoepoxides being selected from aliphatic and cycloaliphatic monoepoxides having at least one tertiary or quaternary carbon atom.

3. A mixture as claimed in claim 1, wherein the epoxide-amine adducts can be prepared by reacting
a) aliphatic and/or cycloaliphatic diepoxides having 8 to 50 carbon atoms and
b) primary or secondary monoamines having 4 to 30 carbon atoms, whose amino groups are not attached directly to an aromatic structure,
wherein a mass fraction of at least 20 % of the monoamines is selected from monoamines having at least one tertiary or quaternary carbon atom.

4. A mixture as claimed in claim 1, wherein the epoxide-amine adducts can be prepared by reacting
a) aliphatic and/or cycloaliphatic monoepoxides having 7 to 33 carbon atoms and
b) monoamines selected from primary and secondary monoamines having 4 to 30 carbon atoms, whose amino groups are not attached directly to an aromatic structure,
wherein a mass fraction of at least a % of the monoamines is selected from monoamines having at least one tertiary or quaternary carbon atom and a mass fraction of at least b % of monoepoxides is selected from aliphatic and cycloaliphatic monoepoxides having at least one tertiary or quaternary carbon atom, the sum of a and b being at least 20 and a and b each being greater than 0.

5. A mixture as claimed in claim 2, wherein the monoepoxides are selected from glycidyl esters of α-alkylalkanemonocarboxylic acids and glycidyl esters of α,α-dialkylalkanemonocarboyxlic acids having in each case 8 to 21 carbon atoms in the esters.

6. A mixture as claimed in claim 3, wherein the diepoxides are selected from the diglycidyl ethers of dihydric aliphatic alcohols and the diglycidyl esters of dibasic aliphatic carboxylic acids having 8 to 18 carbon atoms in the ethers and, respectively, 12 to 42 carbon atoms in the esters.

7. A mixture as claimed in claim 4, wherein the monoepoxides are selected from glycidyl esters of α-alkylalkanemonocarboxylic acids and glycidyl esters of α,α-dialkylalkanemonocarboyxlic acids having in each case 8 to 21 carbon atoms in the esters.

8. A mixture as claimed in any one of claims 2, 3 and 4, wherein the functionality of the epoxide-amine adduct is reduced by partial or complete reaction of the functional hydroxyl and amino groups.

9. A mixture as claimed in claim 8, wherein the functional groups of the epoxide-amine adduct are blocked by reaction to form temporary protecting groups.

10. A mixture as claimed in claim 9, wherein the temporary protecting groups are oxazolidine compounds.

11. A mixture as claimed in claim 1, wherein the hydroxyl-containing copolymers are selected from
aa) copolymers which are obtainable by copolymerization of at least two vinyl monomers of which at least one comprises at least one hydroxyl group,
ab) copolymers which are obtainable by copolymerization of at least two vinyl monomers of which at least one has at least one acid group and which are reacted, before, during or after polymerization, with at least one compound which reacts with the acid groups to form an ester with the formation of at least one hydroxyl group, and
ac) copolymers which are obtainable by copolymerization of at least two vinyl monomers of which at least one has at least one hydroxyl group and which are reacted, before, during or after polymerization, with at least one compound which reacts partly or completely with the hydroxyl groups to form an ester with the formation of at least one hydroxyl group.

12. A mixture as claimed in claim 1, wherein a mixture of hydroxyl-containing copolymers is employed which each have a hydroxyl number of from 10 to 250 mg/g and of which at least one has a weight-average molecular mass of more than 3500 g/mol and at least one has a weight-average molecular mass of below 3500 g/mol.

13. A binder for coatings, comprising a mixture as claimed in claim 11.

14. A binder for coatings, comprising a mixture as claimed in claim 12.

15. A coating composition comprising a mixture as claimed in claim 1 and at least one curing agent selected from the group consisting of amino resins, capped and uncapped polyfunctional isocyanates and organic compounds containing acid and/or acid anhydride groups.

## Revendications

1. Mélanges, les pourcentages étant en masse :
a) de 0,1 à 99,9 % de copolymères hydroxylés choisis parmi les copolymères d'acrylates, les polyesters et les copolymères d'acrylates modifiés par un polyester, et
b) de 99,9 à 0,1 % d'adduits époxyde-amine, qui comportent au moins 20 % en masse de composants époxydes et/ou amines qui contiennent au moins un atome de carbone tertiaire ou quaternaire.

2. Mélanges selon la revendication 1, **caractérisés en ce que** les adduits époxyde-amine peuvent être préparés par réaction
a) de monoépoxydes aliphatiques et/ou cycloaliphatiques ayant de 7 à 33 atomes de carbone, et
b) d'amines ayant au moins deux groupes amino primaires ou secondaires et 2 à 30 atomes de carbone, dont les groupes amino primaires ou secondaires ne sont pas directement liés à un aromatique,
une quantité d'au moins 20 % en masse de monoépoxydes étant choisie parmi les monoépoxydes aliphatiques et cycloaliphatiques ayant au moins un atome de carbone tertiaire ou quaternaire.

3. Mélanges selon la revendication 1, **caractérisés en ce que** les adduits époxyde-amine peuvent être préparés par réaction
a) de diépoxydes aliphatiques et/ou cycloaliphatiques ayant de 8 à 50 atomes de carbone, et
b) de monoamines primaires ou secondaires ayant de 4 à 30 atomes de carbone, dont les groupes amino ne sont pas directement liés à un aromatique,
**caractérisés en ce qu'**une quantité d'au moins 20 % en masse des monoamines est choisie parmi les monoamines ayant au moins un atome de carbone tertiaire ou quaternaire.

4. Mélanges selon la revendication 1, **caractérisés en ce que** les adduits époxyde-amine peuvent être préparés par réaction
a) de monoépoxydes aliphatiques et/ou cycloaliphatiques ayant de 7 à 33 atomes de carbone, et
b) de monoamines choisies parmi les monoamines primaires et secondaires ayant de 4 à 30 atomes de carbone, dont les groupes amino ne sont pas directement liés à un aromatique,
**caractérisés en ce qu'**une quantité d'au moins a % en masse des monoamines est choisie parmi les monoamines ayant au moins un atome de carbone tertiaire ou quaternaire et qu'une quantité d'au moins b % en masse des monoépoxydes est choisie parmi les monoépoxydes aliphatiques et cycloaliphatiques ayant au moins un atome de carbone tertiaire ou quaternaire, la somme de a et de b étant d'au moins 20, a et b étant chacun supérieur à zéro.

5. Mélanges selon la revendication 2, **caractérisés en ce que** les monoépoxydes sont choisis parmi les esters glycidyliques d'acides α-alkylalcanemonocarboxyliques et les esters glycidyliques d'acides α,α-dialkylalcane-monocarboxyliques ayant chacun de 8 à 21 atomes de carbone dans les esters.

6. Mélanges selon la revendication 3, **caractérisés en ce que** les diépoxydes sont choisis parmi les éthers diglycidyliques de dialcools aliphatiques et les esters diglycidyliques d'acides dicarboxyliques aliphatiques ayant respectivement de 8 à 18 atomes de carbone dans les

7. Mélanges selon la revendication 4, **caractérisés en ce que** les monoépoxydes sont choisis parmi les esters glycidyliques d'acides α-alkylalcanemonocarboxyliques et les esters glycidyliques d'acides α,α-dialkylalcane-monocarboxyliques ayant chacun de 8 à 21 atomes de carbone dans les esters.

8. Mélanges selon l'une des revendications 2, 3 et 4, **caractérisés en ce que** la fonctionnalité des adduits époxyde-amine est abaissée par réaction partielle ou complète des groupes fonctionnels hydroxyle et amino.

9. Mélanges selon la revendication 8, **caractérisés en ce que** les groupes fonctionnels des adduits époxyde-amine sont bloqués par une réaction conduisant à des groupes protecteurs provisoires.

10. Mélanges selon la revendication 9, **caractérisés en ce que** les groupes protecteurs provisoires sont des oxazolidines.

11. Mélanges selon la revendication 1, **caractérisés en ce que** les copolymères hydroxylés sont choisis parmi
aa) les copolymères qui peuvent être obtenus par polymérisation commune d'au moins deux monomères vinyliques, dont au moins l'un comporte au moins un groupe hydroxyle, et
ab) les copolymères qui peuvent être obtenus par polymérisation commune d'au moins deux monomères vinyliques, dont au moins l'un comporte au moins un groupe acide et qui, avant, pendant ou après la polymérisation, sont mis à réagir avec au moins un composé qui réagit avec les groupes acides avec formation d'un ester et formation d'au moins un groupe hydroxyle, et
ac) les copolymères qui peuvent être obtenus par polymérisation commune d'au moins deux monomères vinyliques, dont au moins l'un comporte au moins un groupe hydroxyle et qui, avant, pendant ou après la polymérisation, sont mis à réagir avec au moins un composé qui réagit avec les groupes hydroxyle avec formation d'un ester et formation d'au moins un groupe hydroxyle.

12. Mélanges selon la revendication 1, **caractérisés en ce que** l'on utilise un mélange de copolymères hydroxylés dont chacun présente un indice d'hydroxyle de 10 à 250 mg/g, et dont au moins l'un présente une masse moléculaire moyenne en masse supérieure à 3500 g/mol et au moins l'un présente une masse moléculaire moyenne en masse inférieure à 3500 g/mol.

13. Liants pour revêtements, contenant des mélanges selon la revendication 1.

14. Liants pour revêtements, contenant des mélanges selon la revendication 12.

15. Compositions de revêtement contenant un mélange selon la revendication 1 et au moins un durcisseur choisi dans le groupe des résines aminoplastes, les polyisocyanates coiffés en bout et non coiffés en bout, et les composés organiques ayant des groupes acides ou anhydrides d'acide.
